# EUROPÄISCHE PATENTSCHRIFT

(11) **EP 2 881 439 B1**
(45) Veröffentlichungstag und Bekanntmachung des Hinweises auf die Patenterteilung: **28.03.2018**
(21) Anmeldenummer: 14194508.9
(22) Anmeldetag: 24.11.2014
(51) Int. Cl.: C08L 77/00, C08K 5/053, C08L 23/08, C08L 33/08, C08L 33/12, C08L 23/02, C08J 5/10

(54) **Polyamid Zusammensetzungen**
Polyamide compositions
Compositions en polyamide

(30) Priorität: 05.12.2013 EP 13195820
(43) Veröffentlichungstag der Anmeldung: 10.06.2015
(73) Patentinhaber: LANXESS Deutschland GmbH, 50569 Köln (DE)
(72) Erfinder: Benighaus, Tobias, 48145 Münster (DE); Joachimi, Detlev, 47800 Krefeld (DE)

(56) Entgegenhaltungen:
- WO-A1-2005/121249
- WO-A1-2010/014785

## Beschreibung

Die vorliegende Erfindung betrifft thermoplastische Formmassen auf Basis wenigstens eines Polyamids enthaltend mindestens ein Polyol und mindestens ein Copolymerisat aus mindestens einem Olefin mit mindestens einem Methacrylsäurester oder Acrylsäureester eines aliphatischen Alkohols. Des Weiteren betrifft diese Erfindung Erzeugnisse, insbesondere Fasern, Folien und Formteile aus diesen Formmassen und deren Verwendung. Zusätzlich betrifft diese Erfindung die Verwendung der beanspruchten Copolymerisate zur Reduktion der Belagsbildung von Polyamid-Formmassen bzw. auf den aus diesen Formmassen erhältlichen Erzeugnissen, die mindestens ein Polyol der Reihe Pentaerythrit, Dipentaerythrit und Tripentaerythrit enthalten.

### Stand der Technik

Polyamide werden häufig als Werkstoffe für Formteile eingesetzt, die während ihrer Lebensdauer erhöhten Temperaturen über einen längeren Zeitraum ausgesetzt sind. Für eine Vielzahl von Anwendungen ist es dabei erforderlich, dass die Werkstoffe ausreichend stabil gegenüber thermooxidativer Schädigung sind, die im Laufe der Lebenszeit eines aus diesen Werkstoffen hergestellten Erzeugnisses auftreten kann, insbesondere bei Anwendung solcher Erzeugnisse im Motorraum von Kraftfahrzeugen.
Polyamide zeigen im Allgemeinen eine Verschlechterung ihrer mechanischen Eigenschaften, wenn sie über einen längeren Zeitraum erhöhten Temperaturen ausgesetzt werden. Dieser Effekt basiert primär auf der oxidativen Schädigung des Polymers bei erhöhten Temperaturen (thermooxidative Schädigung). Ein längerer Zeitraum im Sinne der vorliegenden Erfindung bedeutet länger als 100 Stunden, erhöhte Temperaturen im Sinne der vorliegenden Erfindung bedeutet höher als 80 °C.
Die Stabilität thermoplastischer Formmassen gegen thermooxidative Schädigung wird üblicherweise durch den Vergleich mechanischer Eigenschaften beurteilt, insbesondere durch Vergleich der im Zugversuch nach ISO 527 gemessenen Bruchspannung und Bruchdehnung bei definierter Temperatur über einen definierten Zeitraum.
Zahlreiche Systeme zur Stabilisierung von Polymeren gegen thermooxidative Schädigung und dem daraus resultierenden molekularen Abbau sind bekannt und wurden in der Literatur beschrieben. Eine Zusammenfassung findet sich im "Plastic Additives Handbook" ,5th Edition, Herausgeber: Hans Zweifel, Carl Hanser Verlag, München 2001, auf den Seiten 10 bis 19 und 40 bis 92. In technischen Thermoplasten, insbesondere Polyamiden, werden üblicherweise Antioxidantien auf Basis sterisch gehinderter Phenole oder auf Basis aromatischer Amine als organische Stabilisatoren oder Systeme auf Basis von Kupferverbindungen als anorganische Stabilisatoren eingesetzt. Die genannten organischen Stabilisatoren werden im Allgemeinen bei Temperaturen bis ca. 120 °C eingesetzt, einige sind auch bei höheren Temperaturen noch wirksam. Eine effektive Stabilisierung bei höheren Temperaturen bis ca. 140 °C wird üblicherweise durch Stabilisatorsysteme auf Basis von Mischungen aus Kupferhalogeniden und Alkalihalogeniden erreicht.

In den letzten Jahren sind die Anforderungen an die Gebrauchstemperaturen, bei denen Polyamide noch ausreichend stabil sind, deutlich gestiegen. In vielen Anwendungen ist eine Langzeitwärmestabilisierung gegen thermooxidativen Abbau bei 160°C ja sogar bei Temperaturen bis in den Bereich von 180 bis 200°C gefordert. Im Rahmen der vorliegenden Erfindung wurde als Langzeit für die Versuche eine Dauer im Bereich von 1000 +/- 10 Stunden festgelegt. Die Zugabe von Polyolen zu Polyamid-basierten Formmassen stellt eine Möglichkeit dar, um Polyamide für die Verwendung bei Temperaturen im Bereich von 180 bis 200 °C zu stabilisieren. Besonders die Polyole Pentaerythrit, Dipentaerythrit und Tripentaerythrit haben sich als potente Stabilisatoren bei derartigen Temperaturen erwiesen.

WO2010/014785 A1 beschreibt Polyamid-Formmassen, die durch Zugabe von Polyolen, besonders Dipentaerythrit und Tripentaerythrit, für Temperaturen bis 230 °C stabilisiert werden.

WO2011/014556 A1 lehrt, dass auch Polyamid-Formmassen auf Basis von Mischungen von teilaromatischen Polyamiden und amorphen Polyamiden mit diesen Polyolen stabilisiert werden können.

CN102030982 A beschreibt ein Stabilisatorsystem für Polyamidformmassen, welches aus einem elementaren Metall und Polyolen, insbesondere Dipentaerythrit, besteht.

Des Weiteren werden kurzkettige Polyole üblicherweise auch zur Verbesserung der Fließfähigkeit von Polyamid-basierten Formmassen eingesetzt.

So beschreibt EP 1041109 A2 Polyamid-basierte Formmassen, deren Fließfähigkeit durch die Zugabe von Polyolen, besonders auch von Pentaerythrit und Dipentaerythrit, deutlich verbessert wird ohne die mechanischen Eigenschaften der Formmassen deutlich zu verschlechtern.

WO2010/014785 A1 beschreibt die Bereitstellung thermoplastischer Artikel auf Basis beispielsweise von Polyamid (6T/DT), einem Polyol, Glasfasern sowie weiterer Additive, die stabil gegenüber thermooxidativer Schädigung sind.

WO2007/036929 A1 beschreibt einen Prozess zur Produktion von Polyamid-Harzen mit verbesserter Fließfähigkeit, in dem Polyol, besonders auch Pentaerythrit, dem Polyamid während der Polymerisation zugegeben wird.

Derartige Polyamid-basierte Formmassen, die Polyole enthalten, haben jedoch den Nachteil, dass die Polyole unter feuchten Klimabedingungen teilweise an die Oberfläche migrieren. Feuchte Klimabedingungen im Sinne dieser Erfindung liegen vor, wenn die Temperatur höher als 25 °C und die relative Luftfeuchtigkeit höher als 65 % ist. Diese Migration führt zur Bildung von Belägen auf den Oberflächen von Formteilen, Fasern oder Folien, die aus solchen Polyamid-Formmassen gefertigt werden. Derartige Oberflächenbeläge stören das ästhetische Empfinden des Kunden und können auch die Haftung von Klebstoffen oder Dichtmitteln erheblich reduzieren.

Aufgabe der vorliegenden Erfindung war daher die Bereitstellung von Zusammensetzungen und daraus herzustellender thermoplastischer Formmassen auf Basis von Polyamid, welche Polyole enthalten und somit eine verbesserte Stabilität gegen thermooxidative Schädigung sowie eine verbesserte Fließfähigkeit bieten, aber gleichzeitig in deutlich geringerem Maße unter feuchten Klimabedingungen Oberflächenbeläge bilden.

Die Fließfähigkeit thermoplastischer Formmassen wird üblicherweise durch den Vergleich der Schmelzeviskosität oder des Volumenfließindex beurteilt. Die Schmelzeviskosität wird im Allgemeinen und auch im Rahmen der vorliegenden Erfindung in einem Kapillar-Viskosimeter gemäß ISO 11443 bestimmt. Niedrige Werte für die Schmelzeviskosität deuten auf eine gute Fließfähigkeit hin. Hierbei ist der Scherratenbereich bei ca. 1000 1/s bis 1500 1/s besonders relevant für Aussagen über die Fließfähigkeit im Spritzgussprozess. Der Volumenfließindex wird im Allgemeinen und auch im Rahmen der vorliegenden Erfindung gemäß DIN EN ISO 1133-1 bei definierter Temperatur und definiertem Belastungsgewicht bestimmt. Ein hoher Wert für den Volumenfließindex deutet auf eine gute Fließfähigkeit hin.

Die Verwendung von Copolymerisaten aus mindestens einem Olefin mit mindestens einem Methacrylsäurester oder Acrylsäureester eines aliphatischen Alkohols als Fließverbesserer Polyamid basierter Formmassen ist aus WO 2005/121249 A1 bekannt.

Überraschenderweise wurde gefunden, dass mit mindestens einem Copolymerisat aus mindestens einem Olefin mit mindestens einem Methacrylsäureester oder Acrylsäureester eines aliphatischen Alkohols die Migration der Polyole unter feuchten Klimabedingungen deutlich verringert werden kann, ohne die positiven Effekte der Polyole auf Fließfähigkeit und Stabilität gegen thermooxidativen Abbau signifikant zu reduzieren. Die Stabiliät gegen thermooxidativen Abbau wurde im Rahmen der vorliegenden Erfindung durch die Bruchspannung ermittelt. Die Bruchkraft ist ein in der Werkstoffprüfung verwendeter Begriff für die Kraft, die benötigt wird, um einen Prüfkörper zu brechen oder zu zerreißen. Die Bruchkraft wird meist als Kraft (in N) oder - auf die Querschnittsfläche der Probe bezogen - als Bruchspannung (in N/mm²) angegeben. Beim Zugversuch oder Biegeversuch wird sie definiert durch den Kraftabfall, der auftritt, wenn das Maximum der Kraft überschritten ist, bei der sich der Werkstoff noch elastisch verformt. Fällt die Kraft z. B. um 20 %, erkennt die Universalprüfmaschine, dass die Probe gebrochen ist. Die Bruchspannung σ_{B} wurde im Rahmen der vorliegenden Erfindung nach EN ISO 527-1 (ISO-Version Februar 2012) durch Zugversuche mit einer Zugprüfmaschine ermittelt (siehe auch: http://de.wikipedia.org/wiki/Zugpr%C3%BCfmaschine).

### Erfindung

Die Lösung der Aufgabe und somit Gegenstand der vorliegenden Erfindung ist daher die Verwendung von mindestens einem der oben genannten Copolymerisate zur Reduktion der Belagsbildung im Feuchtklima bei thermoplastischen Formmassen bzw. daraus herzustellenden Erzeugnissen, die Polyamid und mindestens ein Polyol enthalten, wobei die Polyole organische Moleküle mit mindestens zwei und maximal 12 Hydroxylgruppen pro Molekül und einer mittleren relativen Molekülmasse im Bereich von 64 bis 2000 g/mol sind, wobei im Falle des Einsatzes von Polyolen, die Gemische oligomerer und/oder polymerer Polyole sind, für diesen Bestandteil der Mischung an Stelle der relativen Molekülmasse das Zahlenmittel des Molekulargewichtes (Mₙ) gilt.

Gegenstand der Erfindung sind aber auch thermoplastische Formmassen enthaltend
(a) 10 bis 99,8 Gew.-% mindestens eines Polyamids,
(b) 0,1 bis 10 Gew.-%, bevorzugt 0,5 bis 10 Gew.-%, besonders bevorzugt 1 bis 8 Gew.-%, ganz besonders bevorzugt 2 bis 7 Gew.-% mindestens eines Polyols mit mindestens zwei und maximal 12 Hydroxylgruppen pro Molekül und einer mittleren relativen Molekülmasse im Bereich von 64 bis 2000 g/mol und
(c) 0,1 bis 10 Gew-%, bevorzugt 0,5 bis 10 Gew-%, besonders bevorzugt 1 bis 9 Gew.-%, ganz besonders bevorzugt 2 bis 8 Gew.-% mindestens eines Copolymerisats aus mindestens einem Olefin mit mindestens einem Methacrylsäurester oder Acrylsäureester eines aliphatischen Alkohols, das einen Melt-Flow-Index (MFI) gemessen bei 190°C und einer Belastung von 2,16 kg im Bereich von 100 g / 10 min bis 800 g / 10 min aufweist, der Gehalt des Olefins im Copolymerisat (c) im Bereich von 50 bis 90 Gew.-% und der Gehalt der Acrylsäure- oder Methacrylsäureester im als Komponente (c) einzusetzenden Copolymerisat im Bereich von 10 bis 50 Gew.-% liegt, mit der Maßgabe, dass die Summe aller Gewichtsprozente stets 100 ergibt und im Falle des Einsatzes von Polyolen (b), die Gemische oligomerer und/oder polymerer Polyole sind, für diesen Bestandteil der Mischung an Stelle der relativen Molekülmasse das Zahlenmittel des Molekulargewichtes (Mₙ) die Grenze des Bereiches bestimmt, wobei der Anteil der Komponenten (a), (b) und (c) im Bereich von 50 bis 100 Gew.-% liegt und wobei es sich bei den weiteren Komponenten bzw. übrigen Bestandteilen um Zusatzstoffe handelt, die der Fachmann entsprechend dem späteren Einsatz der Erzeugnisse auswählt.
Die Zubereitung von Zusammensetzungen für eine weitere Nutzung erfolgt durch Mischen der als Edukte einzusetzenden Komponenten (a), (b) und (c) in wenigstens einem Mischwerkzeug. Hierdurch werden die erfindungsgemäßen Formmassen erhalten. Diese Formmassen - auch als thermoplastische Formmassen bezeichnet - können entweder ausschließlich aus den Komponenten (a), (b) und (c) bestehen, oder aber zusätzlich zu den Komponenten (a), (b) und (c) noch weitere Komponenten enthalten. In diesem Fall sind die Komponenten (a), (b) und (c) im Rahmen der angegebenen Mengenbereiche so zu variieren, dass die Summe aller Gewichtsprozente stets 100 ergibt. Bei den thermoplastischen Formmassen und daraus herzustellenden Erzeugnissen liegt der Anteil der Komponenten (a), (b) und (c) im Bereich von 50 bis 100 Gew,-%, besonders bevorzugt im Bereich von 90 bis 100 Gew.-%, vor, wobei es sich bei den weiteren Komponenten bzw. übrigen Bestandteilen um Zusatzstoffe handelt, die der Fachmann entsprechend dem späteren Einsatz der Erzeugnisse auswählt, bevorzugt aus wenigstens einer der im Folgenden definierten Komponenten (d) bis (f).
Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

### Bevorzugte Ausführungsformen der Erfindung

In einer bevorzugten Ausführungsform enthalten die erfindungsgemäßen thermoplastischen Formmassen zusätzlich zu den Komponenten (a) bis (c) noch (d) 5 bis 80 Gew.-% wenigstens eines Füll- oder Verstärkungsstoffes, bevorzugt Glasfasern oder Kohlefasern, besonders bevorzugt Glasfasern, wobei die Anteile wenigstens eine der Komponenten (a) bis (c) so zu reduzieren sind, dass die Summe aller Gewichtsprozente stets 100 ergibt.

In einer bevorzugten Ausführungsform enthalten die erfindungsgemäßen thermoplastischen Formmassen zusätzlich zu den Komponenten (a) bis (d) oder anstelle von (d) noch (e) 0,1 bis 20 Gew.-% wenigstens eine Form von Ruß und/oder Nigrosin, bevorzugt Ruß, wobei die Anteile wenigstens einer der Komponenten (a) bis (c) und gegebenenfalls (d) so zu reduzieren sind, dass die Summe aller Gewichtsprozente stets 100 ergibt.

In einer bevorzugten Ausführungsform enthalten die erfindungsgemäßen thermoplastischen Formmassen zusätzliche zu den Komponenten (a) bis (e) oder anstelle von (d) und/oder (e) noch (f) 0,1 bis 20 Gew.-% wenigstens eines weiteren, von den Komponenten (b), (c), (d) und (e) verschiedenen Inhaltsstoffes, wobei die Anteile wenigstens eine der Komponenten (a) bis (c) und gegebenenfalls (d) und/oder (e) so zu reduzieren sind, dass die Summe aller Gewichtsprozente stets 100 ergibt. Erfindungsgemäß bevorzugt sind thermoplastischen Formmassen enthaltend
(a) 10 bis 94,3 Gew.-% mindestens eines Polyamids,
(b) 0,1 bis 10 Gew.-%, bevorzugt 0,5 bis 5 Gew.-%, besonders bevorzugt 1 bis 4 Gew.-% mindestens eines Polyols mit mindestens zwei und maximal 12 Hydroxylgruppen pro Molekül und einer mittleren relativen Molekülmasse im Bereich von 64 bis 2000 g/mol und
(c) 0,5 bis 10 Gew-%, bevorzugt 0,5 bis 6 Gew.-%, besonders bevorzugt 1 bis 6 Gew.-% mindestens eines Copolymerisats aus mindestens einem Olefin mit mindestens einem Methacrylsäurester oder Acrylsäureester eines aliphatischen Alkohols das einen Melt-Flow-Index (MFI) gemessen bei 190°C und einer Belastung von 2,16 kg im Bereich von 100 g / 10 min bis 800 g / 10 min aufweist und
(d) 5 bis 80 Gew.-%, bevorzugt 10 bis 70 Gew.-%, besonders bevorzugt 15 bis 65 Gew.-% wenigstens eines Füll- oder Verstärkungsstoffes, sowie
(e) 0,1 bis 20 Gew.-% wenigstens einer Form von Ruß oder Nigrosin, bevorzugt wenigstens einer Form von Ruß, wobei die Summe aller Gewichtsprozente stets 100 ergibt und im Falle des Einsatzes von Polyolen (b), die Gemische oligomerer und/oder polymerer Polyole sind, für diesen Bestandteil der Mischung an Stelle der relativen Molekülmasse das Zahlenmittel des Molekulargewichtes (Mₙ) die Grenze des Bereiches bestimmt..

Erfindungsgemäß bevorzugt sind aber auch thermoplastischen Formmassen enthaltend
(a) 10 bis 94,2 Gew.-% mindestens eines Polyamids,
(b) 0,1 bis 10 Gew.-%, bevorzugt 0,5 bis 5 Gew.-%, besonders bevorzugt 1 bis 4 Gew.-% mindestens eines Polyols mit mindestens zwei und maximal 12 Hydroxylgruppen pro Molekül wobei dessen mittlere relative Molekülmasse im Bereich von 64 bis 2000 g/mol liegt und
(c) 0,5 bis 10 Gew-%, bevorzugt 0,5 bis 6 Gew.-%, besonders bevorzugt 1 bis 6 Gew.-% mindestens eines Copolymerisats aus mindestens einem Olefin mit mindestens einem Methacrylsäurester oder Acrylsäureester eines aliphatischen Alkohols das einen Melt-Flow-Index (MFI) gemessen bei 190°C und einer Belastung von 2,16 kg im Bereich von 100 g / 10 min bis 800 g / 10 min aufweist und
(d) 5 bis 80 Gew.-%, bevorzugt 10 bis 70 Gew.-%, besonders bevorzugt 15 bis 65 Gew.-% wenigstens eines Füll- oder Verstärkungsstoffes, sowie
(e) 0,1 bis 20 Gew.-% wenigstens einer Form von Ruß oder Nigrosin, bevorzugt wenigstens einer Form von Ruß, sowie
(f) 0,1 bis 20 Gew.-% wenigstens eines weiteren, von den Komponenten (b), (c), (d) und (e) verschiedenen Zusatzstoffes, wobei die Summe aller Gewichtsprozente stets 100 ergibt und im Falle des Einsatzes von Polyolen (b), die Gemische oligomerer und/oder polymerer Polyole sind, für diesen Bestandteil der Mischung an Stelle der relativen Molekülmasse das Zahlenmittel des Molekulargewichtes (Mₙ) die Grenze des Bereiches bestimmt.

Die vorliegende Erfindung betrifft den Einsatz der thermoplastischen Formmassen im Spritzguss, im Blasformen oder in der Extrusion zur Herstellung von Erzeugnissen, insbesondere Fasern, Folien oder Formkörpern, jeglicher Art.

Die vorliegende Erfindung betrifft des Weiteren die Verwendung dieser Erzeugnisse zur Herstellung von Artikeln für die Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für Kraftfahrzeuge, ganz besonders bevorzugt für den Motorraum von Kraftfahrzeugen.

### Komponente (a)

Die als Komponente (a) einzusetzenden Polyamide können amorphe Polyamide, semikristalline Polyamide oder teilkristalline Polyamide sein. Die als Komponente (a) einzusetzenden Polyamide sind bevorzugt teilkristalline Polyamide, besonders bevorzugt teilkristalline Polyamide mit einem Schmelzpunkt von mindestens 180 °C.

Die in einer Ausführungsform als Komponente (a) einzusetzenden teilkristallinen Polyamide werden bevorzugt ausgewählt aus der Gruppe PA6, PA66, PA610, PA612, PA10, PA810, PA106, PA1010, PA11, PA1011, PA1012, PA1210; PA1212, PA814, PA1014, PA618, PA512, PA613, PA813, PA914, PA1015, PA11, PA12 oder einem teilaromatischen Polyamid, einem sogenannten Polyphthalamid (PPA). Bevorzugte PPAs sind PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer α,ω-Aminocarbonsäure bzw. einem Lactam. Teilkristalline Polyamide besitzen gemäß DE 10 2011 084 519 A1 eine Schmelzenthalpie von mehr als 25 J/g, gemessen mit der DSC-Methode gemäß ISO11357 beim 2. Aufheizen und Integration des Schmelzpeaks. Erfindungsgemäß besonders bevorzugt wird als teilkristallines Polyamid der Komponente (a) PA6 oder PA66 oder ein Copolyamid von PA6 oder PA66 eingesetzt.

Das in einer Ausführungsform als Komponente (a) einzusetzende semikristalline Polyamid besitzt gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Bevorzugte semikristalline Polyamide sind solche, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diamino-dicyclohexylmethan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen.

In einer bevorzugten Ausführungsform wird als Komponente (a) auch ein Blend unterschiedlicher Polyamide eingesetzt. Insbesondere besonders bevorzugt sind weiterhin die meisten auf PA6, PA66 und andere auf aliphatischen oder/und aromatischen Polyamiden bzw. Copolyamiden basierenden Compounds, bei denen auf eine Polyamidgruppe in der Polymerkette 3 bis 11 Methylengruppen kommen.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA6 also dem ε-Caprolactam, ausgegangen worden ist; im Übrigen sei verwiesen auf H. Domininghaus, Die Kunststoffe und ihre Eigenschaften, Seiten 272 ff., VDI-Verlag, 1976.

Bevorzugt wird als Komponente (a) mindestens ein teilkristallines Polyamid mit einer Viskositätszahl bestimmt in einer 0,5 gew.-%igen Lösung in 96 gew.-%iger Schwefelsäure bei 25 °C gemäß ISO 307 im Bereich von 80 bis 180 ml/g, besonders bevorzugt im Bereich von 90 bis 160 ml/g eingesetzt.

Die in einer Ausführungsform einzusetzenden amorphen Polyamide besitzen gemäß DE 10 2011 084 519 A1 eine Schmelzenthalpie von weniger als 4 J/g, gemessen mit der DSC-Methode gemäß ISO 11357 beim 2. Aufheizen und Integration des Schmelzpeaks. Erfindungsgemäß einzusetzende amorphe Polyamide werden in der DE 10 2008 046 682 A1 beschrieben, die wiederum auf GB-PS 619 707, US-PS 2494 563, US-PS 26 96 482, US-PS 25 16 585, US-PS 38 47 877, DE-OS 15 95 354, US-PS 35 97 400, US-PS 38 42 045, CH-PS 4 49 257, DE-OS 24 05 985, DE-OS 29 36 759. EP 0 012 931, DE-PS 26 42 244 und US-PS 42 93 687 verweist, deren Inhalte beispielhafte amorphe Polyamide im Sinne der vorliegenden Erfindung offenbaren. Die in den erfindungsgemäßen thermoplastischen Formmassen einzusetzenden Polyamide können nach verschiedenen Verfahren hergestellt und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine sowie, verschiedene Kettenregler zur Einstellung eines angestrebten Molekulargewichtes, oder auch verschiedene Monomere mit entsprechenden reaktiven Gruppen für später beabsichtigte Nachbehandlungen eingesetzt werden.
Die technisch relevanten Verfahren zur Herstellung der erfindungsgemäß als Komponente (a) einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

### Komponente (b)

Die als Komponente (b) erfindungsgemäß einzusetzenden Polyole sind auch bekannt unter den Bezeichnungen "Polyalkohol" oder "mehrwertiger Alkohol". Bei dem wenigstens einen erfindungsgemäß als Komponente (b) einzusetzenden Polyol handelt sich um organische Moleküle mit mindestens 2 und maximal 12 Hydroxylgruppen pro Molekül, wobei die mittlere relative Molekülmasse des Polyols bzw. der Polyole im Bereich von 64 bis 2000 g/mol liegt. Bevorzugt werden Polyole mit mindestens 3 und maximal 10 Hydroxylgruppen pro Molekül eingesetzt, besonders bevorzugt mit mindestens 4 und maximal 8 Hydroxylgruppen pro Molekül. Im Falle des Einsatzes von Polyolen (b), die Gemische oligomerer und/oder polymerer Polyole sind, wird für diesen Bestandteil der Mischung an Stelle der relativen Molekülmasse das Zahlenmittel des Molekulargewichtes (Mₙ) für die Festlegung der Grenzen des beanspruchten Bereiches eingesetzt.
Das als Komponente (b) einzusetzende wenigstens eine Polyol hat bevorzugt einen aliphatischen oder aromatischen Aufbau bzw. eine Kombination dieser beiden Merkmale. In einer alternativ bevorzugten Ausführungsform enthalten die aliphatischen Ketten innerhalb eines erfindungsgemäß als Komponente (b) einzusetzenden Polyols neben Kohlenstoffatomen auch Heteroatome, bevorzugt Stickstoff, Sauerstoff oder Schwefel. Die erfindungsgemäß einzusetzenden Polyole haben in einer bevorzugten Ausführungsform neben den Hydroxylgruppen außerdem weitere funktionelle Gruppen, bevorzugt Ethergruppen, Carbonsäuregruppen, Amidgruppen oder Estergruppen.
Besonders bevorzugt als Komponente (b) einzusetzende Polyole mit mehr als zwei Hydroxylgruppen sind solche Polyole mit drei Hydroxylgruppen der Gruppe Glyzerin, Trimethylolpropan, 2,3-Di-(2'-hydroxyethyl)-cyclohexan-1-ol, Hexan-1,2,6-triol, 1,1,1-Tris-(hydroxymethyl)ethan, 3-(2'-Hydroxyethoxy)-propan-1,2-diol, 3-(2'-Hydroxypropoxy)-propan-1,2-diol, 2-(2'-Hydroxyethoxy)-hexan-1,2-diol, 6-(2'-Hydroxypropoxy)-hexan-1,2-diol, 1,1,1-Tris-[(2'-hydroxyethoxy)-methyl]-ethan, 1,1,1-Tris-2'-hydroxypropoxy-methyl-propan, 1,1,1-Tris-(4'-hydroxyphenyl)-ethan, 1,1,1-Tris-(hydroxyphenyl)-propan, 1,1,3-Tris-(dihydroxy-3-methylphenyl)-propan, 1,1,4-Tris-(dihydroxyphenyl)-butan, 1,1,5-Tris-(hydroxyphenyl)-3-methylpentan, Di-trimethylolpropan, Ethoxylate und Propoxylate des Trimethylolpropans. Besonders bevorzugt als Komponente (b) einzusetzende Polyole mit mehr als drei Hydroxylgruppen sind Polyole der Reihe D-Mannit, D-Sorbit, Dulcit, Arabit, Inosit, Xylit, Talitol, Allitol, Altritol, Adonit, Erythrit, Threit, Pentaerythrit, Dipentaerythrit und Tripentaerythrit, sowie Polyole aus der Gruppe der Monosaccharide, insbesondere Mannose, Glucose, Galactose, Fructose, D-Xylose, Arabinose, D-Idose, D-Erythrose, D-Threose, D-Ribose, D-Lyxose, D-Allose, D-Altrose, D-Gulose, D-Talose, D-Ribulose, D-Erythrulose, D-Xylulose, D-Psicose, D-Sorbose, D-Tagatose, D-Gluconsäure, D-Zuckersäure, D-Mannozuckersäure, Schleimsäure, D-Glucuronsäure, D-Mannonsäure, Ascorbinsäure, D-Glucosamin, D-Galactosamin.
Insbesondere besonders bevorzugt als Komponente (b) einzusetzende Polyole sind solche mit mehr als drei Hydroxylgruppen. Ganz besonders bevorzugt wird wenigstens ein Polyol der Reihe Pentaerythrit, Dipentaerythrit, Tripentaerythrit und Di-Trimethylolpropan eingesetzt, insbesondere besonders bevorzugt sind Pentaerythrit, Dipentaerythrit und Tripentaerythrit, insbesondere ganz besonders bevorzugt ist Dipentaerythrit.

### Komponente (c)

Als Komponente (c) enthalten die erfindungsgemäßen thermoplastischen Formmassen wenigstens ein Coplymerisat, bevorzugt wenigstens ein statistisches Copolymerisat aus mindestens einem Olefin, bevorzugt α-Olefin, und mindestens einem Methacrylsäureester oder Acrylsäureester eines aliphatischen Alkohols, das einen Melt-Flow-Index (MFI) gemessen bei 190°C und einer Belastung von 2,16 kg von mindestens 100 g / 10 min aufweist. In einer bevorzugten Ausführungsform besteht das als Komponente (c) einzusetzende Copolymerisat zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen, ausgewählt aus der Gruppe umfassend Epoxide, Oxetane, Anhydride, Imide, Aziridine, Furane, Säuren, Amine, Oxazoline, enthalten.

Geeignete Olefine, bevorzugt α-Olefine als Bestandteil der als Komponente (c) einzusetzenden Copolymerisate weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen des Copolymerisats (c) ausschließlich über die Olefine in das Copolymer (c) eingebracht, wobei diese funktionellen Gruppen ausgewählt werden aus der Gruppe umfassend Epoxide, Oxetane, Anhydride, Imide, Aziridine, Furane, Säuren, Amine, Oxazoline.

Der Gehalt des Olefins am Copolymerisat (c) liegt im Bereich von 50 bis 90 Gew.-%, bevorzugt im Bereich von 55 bis 75 Gew.-%.

Das Copolymerisat (c) wird weiterhin definiert durch den zweiten Bestandteil neben dem Olefin. Als zweiter Bestandteil sind Alkylester der Acrylsäure oder Methacrylsäure geeignet, deren Alkylgruppe aus 5-30 Kohlenstoffatomen gebildet wird. Die Alkylgruppe kann dabei linear oder verzweigt sein sowie cycloaliphatische Gruppen enthalten, daneben auch durch eine oder mehrere Ether- oder Thioetherfunktionen substituiert sein. Geeignete Methacrylsäureester oder Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Bevorzugt wird die Alkylgruppe des Methacrylsäureesters oder des Acrylsäureesters ausgewählt aus der Gruppe umfassend 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkylgruppen mit 6 - 20 Kohlenstoffatomen. Besonders bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur TG führen.

Erfindungsgemäß besonders bevorzugt sind als Komponente (c) einzusetzende Copolymerisate auf Basis von Ethen und Acrylsäurealkylester, deren Alkylgruppe aus 5 - 10 Kohlenstoffatomen gebildet wird.

Erfindungsgemäß ganz besonders bevorzugt sind Copolymerisate bei denen das Olefin, insbesondere Ethen, mit Acrylsäure-(2-ethyl)-hexylester copolymerisiert wird.

Ebenfalls geeignet sind Mischungen der beschriebenen Acrylsäureester oder Methacrylsäurester. Bevorzugt ist hierbei die Verwendung von mehr als 60 Gew.-%, besonders bevorzugt mehr als 90 Gew.-% und ganz besonders bevorzugt die Verwendung von 100 Gew.-% Acrylsäure-(2-ethyl)-hexylester bezogen auf die Gesamtmenge an Acrylsäure- und Methacrylsäurester im als Komponente (c) einzusetzenden Copolymerisat.

In einer weiter bevorzugten Ausführungsform werden die weiteren reaktiven funktionellen Gruppen des Copolymerisats (c) ausschließlich über die Acrylsäureester oder Methacrylsäureester in das als Komponente (c) einzusetzende Copolymer eingebracht, wobei die funktionellen Gruppen ausgewählt werden aus der Gruppe umfassend Epoxide, Oxetane, Anhydride, Imide, Aziridine, Furane, Säuren, Amine, Oxazoline .

Der Gehalt der Acrylsäureester oder Methacrylsäureester im als Komponente (c) einzusetzenden Copolymerisat liegt im Bereich von 10 bis 50 Gew.-%, bevorzugt im Bereich von 25 bis 45 Gew.-%.

Als Komponente (c) einzusetzende Copolymerisate zeichnen sich neben der Zusammensetzung durch das niedrige Molekulargewicht aus. Dementsprechend sind für die erfindungsgemäßen Zusammensetzungen und die daraus erhältlichen Formmassen nur Copolymerisate als Komponente (c) geeignet, die einen Melt-Flow-Index (MFI) gemessen bei 190°C und einer Belastung von 2,16 kg im Bereich von 100 g / 10 min bis 800 g / 10 min aufweisen, bevorzugt im Bereich von 150 g / 10 min bis 800 g / 10 min, besonders bevorzugt im Bereich von 300 g / 10 min bis 700 g / 10 min.

Als Komponente (c) geeignete Copolymerisate können ausgewählt sein aus der Gruppe der von der Fa. Arkema unter dem Markennamen Lotryl® EH angebotenen Materialien, die gewöhnlich als Schmelzkleber Verwendung finden. Erfindungsgemäß insbesondere bevorzugt ist ein Copolymerisat aus Ethen und Ethylhexylacrylat (EHA), das als Lotryl® 37 EH 550 [CAS-No. 26984-27-0] von Arkema, Puteaux, Frankreich angeboten wird.

### Komponente (d)

Füll- und Verstärkungsstoffe als Komponente (d) im Sinne der vorliegenden Erfindung sind faserförmige, nadelförmige oder teilchenförmige Füll- und Verstärkungsstoffe. Bevorzugt sind Glasfasern, Kohlenstofffasern, Glaskugeln, amorphe Kieselsäure, Calciumsilicat, Calciummetasilicat, Magnesiumcarbonat, Kaolin, calciniertes Kaolin, Kreide, gepulverter Quarz, Glimmer, Phlogopit, Bariumsulfat, Feldspat, Wollastonit, Montmorillonit, besonders bevorzugt Glasfasern, insbesondere bevorzugt Glasfasern aus E-Glas. Die faserförmigen oder teilchenförmigen Verstärkungsstoffe sind in einer bevorzugten Ausführungsform zur besseren Verträglichkeit mit dem als Komponente (a) einzusetzenden Polyamid mit geeigneten Oberflächenmodifizierungen, insbesondere Oberflächenmodifizierungen enthaltend Silanverbindungen versehen. Erfindungsgemäß werden für Komponente (d) geschnittene Glasfasern mit einer mittleren Ausgangslänge im Bereich von 1 bis 50 mm, besonders bevorzugt im Bereich von 1 bis 10 mm, ganz besonders bevorzugt im Bereich von 2 bis 7 mm eingesetzt. Die Glasfasern der Komponente (d) können bedingt durch die Verarbeitung zur Formmasse oder zum Erzeugnis in der Formmasse oder im Erzeugnis einen kleineren d97 bzw. d50-Wert aufweisen, als die ursprünglich eingesetzten Glasfasern. So liegt der arithmetische Mittelwert der Glasfaserlänge nach der Verarbeitung häufig nur noch im Bereich von 150 µm bis 300 µm. Der Medianwert oder d50-Wert ist als Maß für die mittlere Teilchengröße die wichtigste Kenngröße. 50 Volumen-Prozent der Probe sind feiner und die anderen 50% sind grober als d50. d25, d75 oder d97 sind analog definiert (Clariant Analytical Services, Technical Sheet 106).
Die erfindungsgemäß als Komponente (d) bevorzugt einzusetzenden Glasfasern [CAS No. 65997-17-3] haben bevorzugt einen mittleren Faserdurchmesser im Bereich von 7 bis 18 µm, besonders bevorzugt im Bereich von 9 bis 15 µm, der durch wenigstens eine dem Fachmann zur Verfügung stehende Möglichkeit zu ermitteln ist. Die als Komponente (d) einzusetzenden Glasfasern werden bevorzugt als geschnittene oder als Endlosfasern oder gemahlene Glasfasern zugesetzt. Eine Längen- und Durchmesser- / Dickenbestimmung der Einzelfaser erfolgt im Rahmen der vorliegenden Erfindung halbautomatisch anhand rasterelektronenmikroskopischer Bilder (REM) mittels Grafiktableau und rechnergestützter Datenerfassung.
Die als Komponente (d) bevorzugt einzusetzenden Fasern, insbesondere Glasfasern, werden bevorzugt mit einem geeigneten Schlichtesystem oder einem Haftvermittler bzw. Haftvermittlersystem, besonders bevorzugt mit einem Haftvermittler auf Silanbasis, ausgerüstet.

Ganz besonders bevorzugte Haftvermittler auf Silanbasis für die Ausrüstung der Füll- oder Verstärkungsstoffe, insbesondere Glasfasern, sind Silanverbindungen der allgemeinen Formel (I)

(X-(CH₂)_{q})ₖ-Si-(O-CᵣH₂ᵣ+1)₄-ₖ (I)

in der die Substituenten folgende Bedeutung haben:
- X:: NH₂-, HO-,

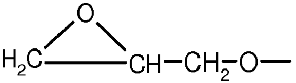

- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X in Formel (I) eine Glycidylgruppe enthalten.

Für die Ausrüstung der insbesondere bevorzugt als Komponente (d) einzusetzenden Glasfasern werden die bevorzugt Silanverbindungen als Haftvermittler enthaltenden Schlichtesysteme bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% (Gew.-% nach Trocknung) bezogen auf die Glasfasern zur Oberflächenbeschichtung eingesetzt. Der Gewichtsanteil an Haftvermittlern, insbesondere Silanen, an der Oberflächenbeschichtung der Glasfasern beträgt bevorzugt 2 - 10 Gew.-% der Trockenmasse.

### Komponente (e)

Erfindungsgemäß wird als Komponente (e) wenigstens eine Form von Ruß und/oder Nigrosin, insbesondere Ruß eingesetzt. Zur Unterscheidung wird für den gezielt hergestellten Industrie-Grundstoff Ruß meist der englische Begriff Carbon Black gebraucht, manchmal auch noch der ältere Begriff Industrieruß. Industrieruß ist eine Modifikation des Kohlenstoffs mit sehr hoher Oberfläche und wird vor allem als Schwarzpigment verwendet. International üblich ist die Klassifizierung von Standardrußen nach der US-amerikanischen ASTM-Norm. Bevorzugt wird Ruß mit einer mittleren Partikelgröße im Bereich von 5 und 60 nm, besonders bevorzugt im Bereich von 10 und 40 nm und ganz besonders bevorzugt im Bereich von 15 und 25 nm eingesetzt. Die erfindungsgemäß einzusetzenden Ruße [CAS No. 1333-86-4] werden bevorzugt als Pulver oder Perlen eingesetzt. Ganz besonders bevorzugt als Komponente (e) einzusetzende Ruße werden ausgewählt aus der Gruppe der ASTM-Normen N220, N234, N294, N330, N326, N347, N440, N472, N539, N550, N568, N601, N660, N762, N770, N785, N880 und N990 (http://de.wikipedia.org/wiki/Ru%C3%9F). Erfindungsgemäß als Komponente (e) einzusetzender Ruß wird auch als Schwarz-Pigment (C. I. Pigment Black 7) bezeichnet. Weitere Typen sind erhältlich von Orion Carbons als Black Pigments PRINTEX, HIBLACK, AROSPERSE, NIPex, NEROX, COLOUR BLACK, SPECIAL BLACK, oder vom Hersteller Birla Carbon die Typen Raven, Conductex, Copeblack oder vom Hersteller Cabot die Typen BLACK PEARLS, ELFTEX, MOGUL, MONARCH, REGAL, SPHERON, STERLING, VULCAN, CSX, CRX, IRX, UNITED.

Nigrosin [CAS No. 8005-03-6] ist eine Mischung synthetischer schwarzer Farbstoffe (CI 50415, Solvent Black 5) und wird aus einem Gemisch von Nitrobenzol, Anilin und Anilinhydrochlorid in Gegenwart eines Kupfer- oder Eisenkatalysators hergestellt. Die wichtigsten industriellen Anwendungen sind als Farbmittel für Lacke und in Marker-Stift-Tinten. Nigrosin ist beispielsweise erhältlich bei Kremer Pigmente GmbH & Co.KG, Aichstetten, Deutschland.

### Komponente (f)

Weitere Zusatzstoffe als Komponente (f) im Sinne der vorliegenden Erfindung sind unterschiedlich zu den Komponenten (b) bis (e) und bevorzugt Stoffe der Reihe Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden.

Die als Komponente (f) einzusetzenden Zusatzstoffe können alleine oder in Mischung bzw. in Form von Masterbatchen eingesetzt werden.

Erfindungsgemäß bevorzugt als Zusatzstoff (f) einzusetzende zusätzliche Thermostabilisatoren sind Kupferverbindungen, insbesondere Kupferhalogenide in Kombination mit Alkalimetallhalogeniden und/oder Erdalkalimetallhalogenide, bevorzugt Natriumchlorid oder Calciumchlorid, Manganchlorid, sterisch gehinderte Phenole und/oder Phosphite, Phosphate, bevorzugt Dinatriumdihydrogendiphosphat, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen.

Erfindungsgemäß bevorzugt als Zusatzstoff (f) einzusetzende UV-Stabilisatoren sind substituierte Resorcine, Salicylate, Benzotriazole oder Benzophenone.

Erfindungsgemäß als Zusatzstoff (f) einzusetzende Schlagzähmodifikatoren oder Elastomermodifikatoren sind unterschiedlich zur Komponente (c) bevorzugt Copolymerisate, die wiederum bevorzugt aus mindestens zwei der folgenden Reihe an Monomeren aufgebaut sind: Ethylen, Propylen, Butadien, Isobuten, Isopren, Chloropren, Vinylacetat, Styrol und Acrylnitril. Die Copolymerisate können kompatibilisierende Gruppen, bevorzugt Maleinsäureanhydrid oder Epoxid enthalten.

Erfindungsgemäß als Zusatzstoff (f) einzusetzende Farbstoffe oder Pigmente sind unterschiedlich zur Komponente (e) bevorzugt anorganische Pigmente, besonders bevorzugt Titandioxid, Ultramarinblau, Eisenoxid oder Zinksulfid, sowie organische Pigmente, besonders bevorzugt Phthalocyanine, Chinacridone, Perylene sowie Farbstoffe, besonders bevorzugt Anthrachinone als Farbmittel sowie andere Farbmittel.

Erfindungsgemäß als Zusatzstoff (f) einzusetzende Nukleierungsmittel sind bevorzugt Natrium- oder Calciumphenylphosphinat, Aluminiumoxid oder Siliziumdioxid oder Talkum, besonders bevorzugt Talkum.

Erfindungsgemäß als Zusatzstoff (f) einzusetzende Gleit- und/oder Entformungsmittel sind bevorzugt langkettige Fettsäuren, insbesondere Stearinsäure, deren Salze, insbesondere Ca- oder Zn-Stearat sowie deren Esterderivate oder Amidderivate, insbesondere Ethylenbis-stearylamid, Glyzerin-tristearat, Stearylstearat, Montanwachse, insbesondere Ester von Montansäuren mit Ethylenglycol sowie niedermolekulare Polyethylen- bzw. Polypropylenwachse in oxidierter und nicht-oxidierter Form oder, sofern nicht als Nukleierungsmittel eingesetzt, Talkum. Erfindungsgemäß besonders bevorzugte Gleit- und/oder Entformungsmittel sind in der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen enthalten.

Erfindungsgemäß besonders bevorzugt wird Talkum, bevorzugt mikrokristallines Talkum, eingesetzt. Talkum [CAS No. 14807-96-6], auch als Talk bezeichnet, ist ein Schichtsilikat mit der chemischen Zusammensetzung Mg₃[Si₄O₁₀(OH)₂], das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum kann beispielsweise als Mistron® R10 von Imerys Talc Group, Toulouse, Frankreich (Rio Tinto Group) bezogen werden. Erfindungsgemäß wird unter mikrokristallinem Talkum ein Talkum verstanden, dessen mittlerer d50-Durchmesser gleich oder kleiner als 4,5 Mikron ist. Es wird vorzugsweise ein mikrokristallines Talkum mit einem d95-Schnittdurchmesser von gleich oder kleiner als 15 Mikron verwendet.
Unter "mittlerer d50-Durchmesser" ist ein Durchmesser zu verstehen, bei dem 50 Gew.-% der Partikel eine Größe von weniger als dem genannten Durchmesser haben; unter "D₉₅-Schnittdurchmesser" ist ein Durchmesser zu verstehen, bei dem 95 Gew.-% der Partikel eine Größe von weniger als dem genannten Durchmesser haben. Für nichtsphärische Partikel wird die Größe durch den äquivalenten sphärischen Durchmesser bestimmt (Stokes-Durchmesser). Alle diese d50- und d95-Durchmessermessungen werden mit einer Vorrichtung "Sédigraph" (Warenzeichen) durch Schwerkraftsedimentation gemäß der Norm AFNOR X11-683 durchgeführt. Standard-Talkum besitzt einen d50 in der Größenordnung von 8 bis 15 Mikron. In einer weiteren bevorzugten Ausführungsform enthalten die erfindungsgemäßen Zusammensetzungen bzw. die aus diesen herzustellenden thermoplastischen Formmassen Mischungen der oben genannten Gleit- und/oder Entformungsmittel.
Die Komponenten (b) und (c) können in unterschiedlichen Verhältnissen zueinander eingesetzt werden. Bevorzugt im Sinne dieser Erfindung sind relative Gewichtsverhältnisse der Komponente (b) zur Komponente (c) zwischen 5:1 und 1:5, besonders bevorzugt zwischen 3:1 und 1:3, ganz besonders bevorzugt zwischen 2:1 und 1:2.
Die erfindungsgemäßen thermoplastischen Formmassen können auch in thermoplastischen Faserverbundwerkstoffen Einsatz finden. Gegenstand der vorliegenden Erfindung sind daher auch thermoplastische Faserverbundwerkstoffe, deren thermoplastische Matrix die erfindungsgemäßen Formmassen enthält. Thermoplastische Faserverbundwerkstoffe im Sinne der vorliegenden Erfindung sind endlosfaserverstärkte Halbzeuge, die auch als Organobleche bezeichnet werden und beispielsweise bei der Firma Bond-Laminates GmbH, Brilon, Deutschland unter der Marke TEPEX® erhältlich sind. Es handelt sich bei diesen Organoblechen um vollständig imprägnierte und konsolidierte Halbzeuge auf Basis von Endlosfasern, insbesondere Glasfasern, Carbonfasern oder Aramidfasern. Ein Herstellungsverfahren für Organobleche ist beispielsweise aus EP 1 923 420 A1 bekannt, deren Inhalt hiermit vollumfänglich umfasst wird.

Ganz besonders bevorzugt betrifft die vorliegende Erfindung thermoplastische Formmassen enthaltend Polyamid, bevorzugt Polyamid 6 oder Polyamid 66, Dipentaerythrit, Copolymerisat aus Ethen und C₄-C₁₀ Alkylacrylat, bevorzugt 2-Ethylhexylacrylat, sowie wenigstens einen Montanwachsester.

In einer Ausführungsform betrifft die vorliegende Erfindung thermoplastische Formmassen enthaltend Polyamid, bevorzugt Polyamid 6 oder Polyamid 66, Dipentaerythrit, Copolymerisat aus Ethen und C₄-C₁₀ Alkylacrylat, bevorzugt 2-Ethylhexylacrylat, wenigstens einen Montanwachsester, Ruß und/oder Nigrosin, Alkalibromid, bevorzugt Kaliumbromid, sowie Kupferhalogenid, bevorzugt Kupfer (I)-Iodid.

### Verfahren

Ferner ist Gegenstand der vorliegenden Erfindung ein Verfahren zur Herstellung von Formmassen indem man die Komponenten (a) bis (c) sowie gegebenenfalls noch (d) und/oder (e) und/oder (f) in entsprechenden Gewichtsanteilen innerhalb der oben angegebenen Gewichtsprozente mischt, bevorzugt in wenigstens einem Mischaggregat. Bevorzugte Mischaggregate sind Buss-Kneter oder Zweiwellenextruder. Vorzugsweise geschieht das Mischen der Komponenten bei Temperaturen im Bereich von 220 bis 400°C, bevorzugt im Bereich von 220 bis 350 °C. Vorzugsweise erfolgt das Mischen durch gemeinsames Vermengen, Vermischen, Kneten, Compoundieren, Extrudieren oder Verwalzen der Komponenten. Besonders bevorzugt erfolgt das Mischen der Komponenten durch Compoundieren in wenigstens einem Mischaggregat, bevorzugt auf einem gleichläufigen Zweiwellenextruder oder Buss-Kneter. Es kann vorteilhaft sein, einzelne Komponenten vorzumischen.
Erfindungsgemäße Verfahren zur Herstellung von Erzeugnissen mittels Extrusion oder Spritzguss arbeiten bevorzugt bei Schmelzetemperaturen im Bereich von 230 bis 330°C, besonders bevorzugt im Bereich von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.
Bei der Extrusion, auch als Strangpressen bezeichnet, werden feste bis dickflüssige härtbare thermoplastische Formmassen unter Druck kontinuierlich aus einer formgebenden Öffnung, auch als Düse, Matrize oder Mundstück bezeichnet, hinaus gepresst. Dabei entstehen Erzeugnisse mit dem Querschnitt der Öffnung in theoretisch beliebiger Länge (http://de.wikipedia.org/wiki/Extrusion_(Verfahrenstechnik)). Die grundsätzlichen Verfahrensschritte des Profil-Extrusionsverfahrens, einer Verfahrensform der Extrusion, sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt im Kunststoff-Handbuch 3/4, Polyamide, Carl Hanser Verlag, München 1998, Seite 374-384. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Das Verfahren des Blasformens ist beispielsweise in http://www.blasformen.com/ beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert.

Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt.

Der Schlauchdurchmesser wird mit unterschiedlich großen Dorn- und Düsennormalien, die an den Schlauchkopf angeflanscht werden, an den zu fertigenden Artikel angepasst.

Die Schlauchdicke und das daraus resultierende Gewicht der Blasformteile wird durch die Auswahl von unterschiedlichen Durchmesser- Differenzen von Dorn zu Düse vorbestimmt.

Das Verfahren des Spritzgusses zeichnet sich dadurch aus, dass der Rohstoff, also die zu verarbeitende thermoplastische Formmasse enthaltend die erfindungsgemäßen Mischungen, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Strang aus der erfindungsgemäßen thermoplastischen Formmasse im Extruder eingesetzt, wobei der Extruder eine Maschine zur Herstellung von Erzeugnissen auf Basis thermoplastischer Formstücke ist. Man unterscheidet
- Einschneckenextruder und Doppelschneckenextruder sowie die jeweiligen Untergruppen
- konventioneller Einschneckenextruder, förderwirksamer Einschneckenextruder,
- gegenläufiger Doppelschneckenextruder und gleichläufiger Doppelschneckenextruder.

### Erzeugnisse

Die vorliegende Erfindung betrifft folglich auch Erzeugnisse, bevorzugt Formteile, Formkörper Fasern oder Halbzeuge, erhältlich durch Extrusion oder Spritzguss der erfindungsgemäßen thermoplastischen Formmassen.

### Verwendungen

Die vorliegende Erfindung betrifft schließlich die Verwendung der erfindungsgemäßen Formmassen für die Herstellung von Artikeln der Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für Kraftfahrzeuge, ganz besonders bevorzugt für den Motorraum von Kraftfahrzeugen.

Gegenstand der vorliegenden Anmeldung ist auch die Verwendung der erfindungsgemäßen Formmassen in der Extrusion, bevorzugt im Extrusionsprozess oder in der Profil-Extrusion, im Spritzguss oder im Blasformen zur Herstellung von Erzeugnissen, bevorzugt von Formteilen oder Halbzeugen.
Gegenstand ist aber auch die Verwendung mindestens eines Polyols mit mindestens zwei und maximal 12 Hydroxylgruppen pro Molekül und einem mittleren Molekulargewicht im Bereich von 64 bis 2000 g/mol in Kombination mit mindestens einem Copolymerisat aus mindestens einem Olefin mit mindestens einem Methacrylsäurester oder Acrylsäureester eines aliphatischen Alkohols mit einem Melt-Flow-Index (MFI) gemessen bei 190°C und einer Belastung von 2,16 kg im Bereich von 100 g / 10 min bis 800 g / 10 min zur Reduktion oder Verhinderung thermooxidativer Schädigungen an Polyamid basierten Formmassen oder aus diesen Formmassen herzustellenden Polyamid basierten Erzeugnissen.

### Beispiele

Die einzelnen Komponenten der erfindungsgemäßen thermoplastischen Formmassen sowie der Komponenten der Vergleichsbeispiele wurden in einem Zweiwellenextruder des Typs ZSK 26 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet.
Anschließend wurde das Granulat auf einer Spritzgieß-Maschine vom Typ Arburg SG370-173732 bei Massetemperaturen im Bereich von 270 bis 300°C und Werkzeugtemperaturen im Bereich von 80 bis 100°C zu Schulterstäben (4mm Dicke gem. ISO 528) und Platten mit den Maßen 400 • 250 • 1,5 mm³ (Bsp. 1 und Vgl.-Bsp. 1) sowie zu Platten mit den Maßen 60 • 4 • 4 mm³ (Bsp. 2 und Vgl.-Bsp. 2 und 3) verarbeitet.
Die mechanischen Eigenschaften der aus den erfindungsgemäßen Zusammensetzungen in Beispiel 2 und aus den Zusammensetzungen für die Vergleichsbeispiele 2 und 3 hergestellten Erzeugnisse wurden im Zugversuch nach ISO 527 bestimmt. Die Stabilität gegen thermooxidative Schädigung wird durch Lagerung der Probekörper bei 200 °C für 1008 h mit anschließendem Zugversuch geprüft.

Die Viskosität der thermoplastischen Formmassen in Beispiel 1 (nicht erfindungsgemäßes Beispiel) und die Viskosität der Formmasse für das Vergleichsbeispiel 1 im geschmolzenen Zustand wurde mit einem Kapillar-Viskosimeter gemäß ISO 11443 bei einer Temperatur von 290 °C bestimmt.
Die Viskosität der thermoplastischen Formmassen in Beispiel 2 und Vergleichsbeispiel 2 und 3 im geschmolzenen Zustand wurde als Volumenfließindex gemäß DIN EN ISO 1133-1 bei einer Temperatur von 290 °C mit einer Vorheizzeit von 10 min und einem Belastungsgewicht von 5kg bestimmt.

Platten in Beispiel 1 (nicht erfindungsgemäß) und Vergleichsbeispiel 1 wurden zwei unterschiedlichen feuchten Klimabedingungen ausgesetzt. Die Platten wurden für 48h bei 90 % relativer Feuchte (r.F.) und 85 °C sowie für 168 h bei 90 % r.F. und 40 °C gelagert. Die Platten in Beispiel 2 und Vergleichsbeispiel 2 und 3 wurden für bis zu 672 h bei 85 % r.F und 85 °C gelagert. Die Belagsbildung nach der Lagerung wurde mit einem Belagindex zwischen 1 und 6 bewertet. Dabei bedeutet ein Belagindex von 1, dass kein Belag gebildet wurde. Ein Belagindex von 3 steht für einen deutlich sichtbaren aber dünnen Belag. Ein Belagindex von 6 bedeutet eine massive Belagsbildung über die gesamte Platte.

Die in den folgenden Tabellen 1 und 2 dargestellten Zusammensetzungen wurden alle nach der oben beschriebenen Weise verarbeitet und geprüft.

### Verwendete Materialien:

Polyamid 6.6, z. B. Vydyne® 50 BWFS von Ascend Performance Materials LLC
Polyamid 6, linear mit einer Viskositätszahl bestimmt in einer 0,5 gew.-%igen Lösung in 96 gew.-%iger Schwefelsäure bei 25 °C gemäß ISO 307 von 145 ml/g
Glasfaser, z. B. CS7928 von Lanxess Deutschland GmbH
Montanwachsester, z. B. Licowax® E von Clariant GmbH [CAS No. 73138-45-1]
Kupfer(I)-Iodid [CAS No. 7681-65-4], d99 < 70 µm
Kaliumbromid [CAS No. 7758-02-3], d99 < 70 µm
Talkum [CAS No. 14807-96-6]
Organischer Stabilisator, z. B. Irganox® 1098 [CAS No. 23128-74-7] von BASF SE, N,N'-Hexamethylene bis[3-(3,5-di-t-butyl-4 -hydroxyphenyl)propionamide]
Schlagzähigkeitsmodifikator, z. B. Tafmer® MH7020 von Mitsui Chemicals, Inc., ein säuremodifiziertes Polyolefin [CAS No. 63625-36-5].
Dipentaerythrit, [CAS-No. 126-58-9], z.B. Di-Penta 93 der Perstorp Service GmbH
Copolymerisat aus Ethen und 2-Ethylhexylacrylat, z. B. Lotryl® 37 EH 550 [CAS-No. 26984-27-0] von Arkema GmbH

**Tabelle 1**

| | **Vgl.-Bsp. 1** | **Bsp. 1** |
|---|---|---|
| Polyamid 6.6 | 38,23 | 36,73 |
| Glasfaser | 60,00 | 60,00 |
| Montanwachsester | 0,09 | 0,09 |
| Kupfer(I)-Iodid | 0,02 | 0,02 |
| Kalium-Bromid | 0,06 | 0,06 |
| Dipentaerythrit | 1,35 | 1,35 |
| Copolymerisat aus Ethen und 2-Ethylhexylacrylat | | 1,50 |
| Ruß | 0,15 | 0,15 |
| Nigrosin | 0,10 | 0,10 |
| | | |
| Schmelzeviskosität bei 270 °C/1000 1/s [Pa s] | 180 | 181 |
| Schmelzeviskosität bei 270 °C/1500 1/s [Pa s] | 154 | 148 |
| Schmelzeviskosität bei 290 °C/1000 1/s [Pa s] | 82 | 79 |
| Schmelzeviskosität bei 290 °C/1500 1/s [Pa s] | 71 | 69 |
| | | |
| Belagindex nach 24h bei 85 °C/90% r.F. | 2,5 | 1,0 |
| Belagindex nach 168h bei 40 °C/90% r.F. | 2,5 | 1,0 |

**Tabelle 2**

| | **Vgl.-Bsp. 2** | **Vgl.-Bsp. 3** | **Bsp. 2** |
|---|---|---|---|
| Polyamid 6 | 67,32 | 65,32 | 63,32 |
| Glasfaser | 30,00 | 30,00 | 30,00 |
| Montanwachsester | 0,16 | 0,16 | 0,16 |
| Talkum | 0,02 | 0,02 | 0,02 |
| organischer Stabilisator | 0,50 | 0,50 | 0,50 |
| Schlagzähigkeitsmodifikator | 2,00 | 2,00 | 2,00 |
| Dipentaerythrit | | 2,00 | 2,00 |
| Copolymerisat aus Ethen und 2-Ethylhexylacrylat | | | 2,00 |
| | | | |
| Volumenfließindex bei 290 °C / 5 kg [cm³/10 min] | 69 | 217 | 241 |
| | | | |
| Belagindex nach 168h bei 85 °C/85% r.F. | 1,0 | 1,5 | 1,0 |
| Belagindex nach 672h bei 85 °C/85% r.F. | 1,0 | 2,0 | 1,0 |
| | | | |
| Bruchspannung nach 0 h bei 200 °C [MPa] | 176 | 167 | 154 |
| Bruchspannung nach 1008 h bei 200 °C [MPa] | 151 | 183 | 171 |
| relative Veränderung der Bruchspannung [%] | -14 | +10 | +11 |

In Tabelle 1 zeigen die thermoplastischen Formmassen des Vergleichsbeispiels 1 eine deutliche Belagsbildung unter beiden geprüften Klimabedingungen. Durch die Zugabe des Copolymerisats aus Ethen und 2-Ethylhexylacrylat wird diese Belagsbildung deutlich reduziert. Nach Lagerung unter beiden Klimabedingungen wird keine Belagsbildung mehr beobachtet. Die Viskosität der Formmasse wird durch Zugabe des Copolymerisats nicht erhöht. Daraus kann geschlossen werden, dass die fließverbessernde Wirkung des Dipentaerythrit durch die Zugabe des Copolymerisats nicht reduziert wird.

In Tabelle 2 zeigt der Vergleich der Ergebnisse für den Volumenfließindex von Vergleichsbeispiel 3 und Beispiel 2, dass auch bei diesen Formmassen die Zugabe des Copolymerisats die viskositätsreduzierende Wirkung des Dipentaerythrit nicht beeinträchtigt. Der positive Effekt des Dipentaerythrits ist beim Vergleich der Ergebnisse des Volumenfließindex von Vergleichsbeispiel 2 und 3 ersichtlich.

Die Ergebnisse für den Belagbildungsindex nach Lagerung bei 85 °C / 85 % r.F. zeigen, dass die Zugabe von Dipentaerythrit zu einer deutlichen Steigerung der Belagsbildung führt (Vgl.-Bsp. 2 und 3). Dieser Effekt kann durch die zusätzliche Zugabe des Copolymerisats in Beispiel 2 vermieden werden. Es wird in diesem Beispiel keine Belagsbildung mehr beobachtet.

Bei der Formmasse mit herkömmlichem Kupferstabilisator (Vgl.-Bsp. 2) führt die Lagerung über 1008 h bei 200 °C zu einer 14%igen Reduktion der Bruchspannung im Zugversuch. Die stabilisierende Wirkung des Dipentaerythrit führt dazu, dass die Bruchspannung nach 1008 h Lagerung bei 200 °C um 10 % zunimmt (Vgl.-Bsp. 3). Diese stabilisierende Wirkung wird durch die Zugabe des Copolymerisats in Beispiel 2 nicht negativ beeinflusst. In Beispiel 2 steigt die Bruchspannung um 11 % nach 1008 h Lagerung bei 200 °C.

## Patentansprüche

1. Thermoplastische Formmassen enthaltend
(a) 10 bis 99,8 Gew.-% mindestens eines Polyamids,
(b) 0,1 bis 10 Gew.-% mindestens eines Polyols mit mindestens zwei und maximal 12 Hydroxylgruppen pro Molekül und einer mittleren relativen Molekülmasse im Bereich von 64 bis 2000 g/mol und
(c) 0,1 bis 10 Gew.-% mindestens eines Copolymerisats aus mindestens einem Olefin mit mindestens einem Methacrylsäurester oder Acrylsäureester eines aliphatischen Alkohols, das einen Melt-Flow-Index (MFI) gemessen bei 190°C und einer Belastung von 2,16 kg im Bereich von 100 g / 10 min bis 800 g / 10 min aufweist, der Gehalt des Olefins im Copolymerisat (c) im Bereich von 50 bis 90 Gew.-% und der Gehalt der Acrylsäure- oder Methacrylsäureester im als Komponente (c) einzusetzenden Copolymerisat im Bereich von 10 bis 50 Gew.-% liegt, mit der Maßgabe, dass die Summe aller Gewichtsprozente stets 100 ergibt und im Falle des Einsatzes von Polyolen (b), die Gemische oligomerer und/oder polymerer Polyole sind, für diesen Bestandteil der Mischung an Stelle der relativen Molekülmasse das Zahlenmittel des Molekulargewichtes (Mₙ) die Grenze des Bereiches bestimmt, wobei der Anteil der Komponenten (a), (b) und (c) im Bereich von 50 bis 100 Gew.-% liegt und wobei es sich bei den weiteren Komponenten bzw. übrigen Bestandteilen um Zusatzstoffe handelt, die der Fachmann entsprechend dem späteren Einsatz der Erzeugnisse auswählt.

2. Thermoplastische Formmassen gemäß Anspruch 1, **dadurch gekennzeichnet, dass** diese zusätzlich zu den Komponenten (a) bis (c) noch (d) 5 bis 80 Gew.-% wenigstens eines Füll- oder Verstärkungsstoffes, bevorzugt Glasfasern oder Kohlefasern, enthalten, wobei die Anteile der Komponenten (a) bis (c) so reduziert werden, dass die Summe aller Gewichtsprozente stets 100 ergibt.

3. Thermoplastische Formmassen gemäß Anspruch 1 oder 2, **dadurch gekennzeichnet, dass** diese zusätzlich zu den Komponenten (a) bis (d) oder anstelle von (d) noch (e) 0,1 bis 20 Gew.-% wenigstens eine Form von Ruß und/oder Nigrosin enthalten, wobei die Anteile der Komponenten (a) bis (c) und gegebenenfalls (d) so reduziert werden, dass die Summe aller Gewichtsprozente stets 100 ergibt.

4. Thermoplastische Formmassen gemäß einem der Ansprüche 1 bis 3, **dadurch gekennzeichnet, dass** amorphe Polyamide, semikristalline Polyamide oder teilkristalline Polyamide eingesetzt werden.

5. Thermoplastische Formmassen gemäß Anspruch 4, **dadurch gekennzeichnet, dass** ein teilkristallines Polyamid mit einer Viskositätszahl bestimmt in einer 0,5 gew.-%igen Lösung in 96 gew.-%iger Schwefelsäure bei 25 °C gemäß ISO 307 im Bereich von 80 bis 180 ml/g eingesetzt wird.

6. Thermoplastische Formmassen gemäß Anspruch 5, **dadurch gekennzeichnet, dass** aliphatische oder semi-aromatische Polyamide eingesetzt werden.

7. Thermoplastische Formmassen gemäß einem der Ansprüche 1 bis 6, **dadurch gekennzeichnet, dass** als Komponente (b) mindestens ein Polyol der Reihe Pentaerythrit, Dipentaerythrit und Tripentaerythrit eingesetzt wird.

8. Thermoplastische Formmassen gemäß einem der Ansprüche 1 bis 7, **dadurch gekennzeichnet, dass** das Copolymerisat (c) zu weniger als 4 Gew.-% aus Monomerbausteinen besteht, die weitere reaktive funktionelle Gruppen enthalten.

9. Thermoplastische Formmassen gemäß Anspruch 8, **dadurch gekennzeichnet, dass** im Copolymerisat (c) das Olefin mit Acrylsäure-(2-ethyl)hexylester copolymerisiert ist.

10. Thermoplastische Formmassen gemäß Anspruch 8 oder 9, **dadurch gekennzeichnet, dass** im Copolymerisat (c) das Olefin Ethen ist.

11. Thermoplastische Formmassen gemäß einem der Ansprüche 1 bis 10, **dadurch gekennzeichnet, dass** das Massenverhältnis zwischen Komponente (b) und Komponente (c) zwischen 5:1 und 1:5 liegt.

12. Verfahren zur Herstellung von Erzeugnissen, **dadurch gekennzeichnet, dass** man die thermoplastischen Formmassen gemäß einem der Ansprüche 1 bis 11 in den angegebenen Gewichtsanteilen durchmischt und diese einem Spritzguss, einer Extrusion oder dem Blasformen unterzieht.

13. Erzeugnisse erhältlich durch Spritzguss, Extrusion oder Blasformen von thermoplastischen Formmassen gemäß eines der Ansprüche 1 bis 11.

14. Erzeugnisse gemäß Anspruch 13, **dadurch gekennzeichnet, dass** es sich um Fasern, Folien, Halbzeuge oder Formteile handelt.

15. Verwendung mindestens eines Polyols mit mindestens zwei und maximal 12 Hydroxylgruppen pro Molekül und einer mittleren relativen Molekülmasse im Bereich von 64 bis 2000 g/mol in Kombination mit mindestens einem Copolymerisat aus mindestens einem Olefin mit mindestens einem Methacrylsäurester oder Acrylsäureester eines aliphatischen Alkohols mit einem Melt-Flow-Index (MFI) gemessen bei 190°C und einer Belastung von 2,16 kg im Bereich von 100 g / 10 min bis 800 g / 10 min zur Reduktion oder Verhinderung thermooxidativer Schädigungen an Polyamid basierten Formmassen oder aus diesen Formmassen herzustellenden Polyamid basierten Erzeugnissen, wobei im Falle des Einsatzes von Polyolen, die Gemische oligomerer und/oder polymerer Polyole sind, für diesen Bestandteil der Mischung an Stelle der relativen Molekülmasse das Zahlenmittel des Molekulargewichtes (Mn) gilt.

16. Verwendung gemäß Anspruch 15, **dadurch gekennzeichnet, dass** es sich bei den Erzeugnissen um Artikel der Elektro-, Elektronik-, Telekommunikations-, Informationstechnologie-, Solar-, Computerindustrie, für den Haushalt, für den Sport, für medizinische Anwendungen oder für die Unterhaltungsindustrie handelt.

## Claims

1. Thermoplastic moulding compositions comprising
(a) 10% to 99.8% by weight of at least one polyamide,
(b) 0.1% to 10% by weight of at least one polyol having at least two and not more than 12 hydroxyl groups per molecule and a mean relative molecular mass in the range from 64 to 2000 g/mol and
(c) 0.1% to 10% by weight of at least one copolymer of at least one olefin with at least one methacrylate or acrylate of an aliphatic alcohol which has a melt flow index (MFI) measured at 190°C with a load of 2.16 kg in the range from 100 g/10 min to 800 g/10 min, the content of the olefin in the copolymer (c) being in the range from 50% to 90% by weight and the content of the acrylates or methacrylates in the copolymer for use as component (c) being in the range from 10% to 50% by weight with the proviso that the sum total of all the percentages by weight is always 100 and, in the case of use of polyols (b) which are mixtures of oligomeric and/or polymeric polyols, it is the number-average molecular weight (Mₙ) rather than the relative molecular mass that determines the limit of the range for that part of the mixture, where the proportion of components (a), (b) and (c) is in the range from 50% to 100% by weight and where the further components or other constituents are additives selected by the person skilled in the art in accordance with the later use of the products.

2. Thermoplastic moulding compositions according to Claim 1, **characterized in that** they comprise, in addition to components (a) to (c), also d) 5% to 80% by weight of at least one filler or reinforcer, preferably glass fibres or carbon fibres, where the proportions of components (a) to (c) are reduced such that the sum total of all the percentages by weight is always 100.

3. Thermoplastic moulding compositions according to Claim 1 or 2, **characterized in that** they comprise, in addition to components (a) to (d) or instead of (d), also (e) 0.1% to 20% by weight of at least one form of carbon black and/or nigrosin, where the proportions of components (a) to (c) and any (d) are reduced such that the sum total of all the percentages by weight is always 100.

4. Thermoplastic moulding compositions according to any of Claims 1 to 3, **characterized in that** amorphous polyamides, semicrystalline polyamides or partly crystalline polyamides are used.

5. Thermoplastic moulding compositions according to Claim 4, **characterized in that** a partly crystalline polyamide having a viscosity number determined in a 0.5% by weight solution in 96% by weight sulphuric acid at 25°C to ISO 307 in the range from 80 to 180 ml/g is used.

6. Thermoplastic moulding compositions according to Claim 5, **characterized in that** aliphatic or semiaromatic polyamides are used.

7. Thermoplastic moulding compositions according to any of Claims 1 to 6, **characterized in that** at least one polyol from the group of pentaerythritol, dipentaerythritol and tripentaerythritol is used as component (b).

8. Thermoplastic moulding compositions according to any of Claims 1 to 7, **characterized in that** the copolymer (c) consists to an extent of less than 4% by weight of monomer units containing further reactive functional groups.

9. Thermoplastic moulding compositions according to Claim 8, **characterized in that** the olefin is copolymerized with 2-ethylhexyl acrylate in the copolymer (c).

10. Thermoplastic moulding compositions according to Claim 8 or 9, **characterized in that** the olefin in the copolymer (c) is ethene.

11. Thermoplastic moulding compositions according to any of Claims 1 to 10, **characterized in that** the mass ratio between component (b) and component (c) is between 5:1 and 1:5.

12. Process for producing products, **characterized in that** the thermoplastic moulding compositions according to any of Claims 1 to 11 are mixed in the proportions by weight specified and these are subjected to an injection moulding, extrusion or blow moulding operation.

13. Products obtainable by injection moulding, extrusion or blow moulding of thermoplastic moulding compositions according to any of Claims 1 to 11.

14. Products according to Claim 13, **characterized in that** they are fibres, films, semifinished products or mouldings.

15. Use of at least one polyol having at least two and not more than 12 hydroxyl groups per molecule and a mean relative molecular mass in the range from 64 to 2000 g/mol in combination with at least one copolymer of at least one olefin with at least one methacrylate or acrylate of an aliphatic alcohol having a melt flow index (MFI) measured at 190°C and a load of 2.16 kg in the range from 100 g/10 min to 800 g/10 min for reduction or prevention of thermooxidative damage to polyamide-based moulding compositions or polyamide-based products that can be produced from these moulding compositions, where the number-average molecular weight (Mn) replaces the relative molecular mass for that part of the mixture in the case of use of polyols that are mixtures of oligomeric and/or polymeric polyols.

16. Use according to Claim 15, **characterized in that** the products are articles for the electrical, electronics, telecommunications, information technology, solar and computer industries, for the household, for sport, for medical applications or for the entertainment industry.

## Revendications

1. Matériaux de moulage thermoplastiques, contenant :
(a) 10 à 99,8 % en poids d'au moins un polyamide,
(b) 0,1 à 10 % en poids d'au moins un polyol contenant au moins deux et au plus 12 groupes hydroxyle par molécule et ayant une masse moléculaire relative moyenne dans la plage allant de 64 à 2 000 g/mol, et
(c) 0,1 à 10 % en poids d'au moins un copolymère d'au moins une oléfine avec au moins un ester de l'acide méthacrylique ou un ester de l'acide acrylique d'un alcool aliphatique, qui présente un indice de fluidité (MFI) mesuré à 190 °C et à une charge de 2,16 kg dans la plage allant de 100 g/10 min à 800 g/10 min, la teneur de l'oléfine dans le copolymère (c) se situant dans la plage allant de 50 à 90 % en poids et la teneur de l'ester de l'acide acrylique ou de l'acide méthacrylique dans le copolymère utilisé en tant que composant (c) se situant dans la plage allant de 10 à 50 % en poids, à condition que la somme de tous les pourcentages en poids soit toujours de 100 et, dans le cas de l'utilisation de polyols (b) qui sont des mélanges de polyols oligomères et/ou polymères, la moyenne en nombre du poids moléculaire (Mₙ) déterminant la limite de la plage pour ce constituant du mélange au lieu de la masse moléculaire relative, la proportion des composants (a), (b) et (c) se situant dans la plage allant de 50 à 100 % en poids, et les autres composants ou les autres constituants étant des additifs que l'homme du métier choisit en fonction de l'utilisation ultérieure des produits.

2. Matériaux de moulage thermoplastiques selon la revendication 1, **caractérisés en ce que** ceux-ci contiennent en plus des composants (a) à (c) encore (d) 5 à 80 % en poids d'au moins une charge ou matière renforçante, de préférence des fibres de verre ou des fibres de carbone, les proportions des composants (a) à (c) étant réduites de sorte que la somme de tous les pourcentages en poids soit toujours de 100.

3. Matériaux de moulage thermoplastiques selon la revendication 1 ou 2, **caractérisés en ce que** ceux-ci contiennent en plus des composants (a) à (d) ou à la place de (d) encore (e) 0,1 à 20 % en poids d'au moins une forme de noir de carbone et/ou de nigrosine, les proportions des composants (a) à (c) et éventuellement (d) étant réduites de sorte que la somme de tous les pourcentages en poids soit toujours de 100.

4. Matériaux de moulage thermoplastiques selon l'une quelconque des revendications 1 à 3, **caractérisés en ce que** des polyamides amorphes, des polyamides semi-cristallins ou des polyamides partiellement cristallins sont utilisés.

5. Matériaux de moulage thermoplastiques selon la revendication 4, **caractérisés en ce qu'**un polyamide partiellement cristallin ayant un indice de viscosité déterminé dans une solution à 0,5 % en poids dans de l'acide sulfurique à 96 % en poids à 25 °C selon ISO 307 dans la plage allant de 80 à 180 ml/g est utilisé.

6. Matériaux de moulage thermoplastiques selon la revendication 5, **caractérisés en ce que** des polyamides aliphatiques ou semi-aromatiques sont utilisés.

7. Matériaux de moulage thermoplastiques selon l'une quelconque des revendications 1 à 6, **caractérisés en ce qu'**au moins un polyol de la série constituée par la pentaérythrite, la dipentaérythrite et la tripentaérythrite est utilisé en tant que composant (b) .

8. Matériaux de moulage thermoplastiques selon l'une quelconque des revendications 1 à 7, **caractérisés en ce que** le copolymère (c) est constitué de moins de 4 % en poids de constituants monomères qui contiennent d'autres groupes fonctionnels réactifs.

9. Matériaux de moulage thermoplastiques selon la revendication 8, **caractérisés en ce que** l'oléfine dans le copolymère (c) est copolymérisée avec de l'ester (2-éthyl)hexylique de l'acide acrylique.

10. Matériaux de moulage thermoplastiques selon la revendication 8 ou 9, **caractérisés en ce que** l'oléfine dans le copolymère (c) est l'éthène.

11. Matériaux de moulage thermoplastiques selon l'une quelconque des revendications 1 à 10, **caractérisés en ce que** le rapport massique entre le composant (b) et le composant (c) est compris entre 5:1 et 1:5.

12. Procédé de fabrication de produits, **caractérisé en ce que** les matériaux de moulage thermoplastiques selon l'une quelconque des revendications 1 à 11 sont mélangés en les proportions en poids indiquées, et ceux-ci sont soumis à un moulage par injection, une extrusion ou un moulage par soufflage.

13. Produits pouvant être obtenus par moulage par injection, extrusion ou moulage par soufflage de matériaux de moulage thermoplastiques selon l'une quelconque des revendications 1 à 11.

14. Produits selon la revendication 13, **caractérisés en ce qu'**il s'agit de fibres, de films, de produits semi-finis ou de pièces moulées.

15. Utilisation d'au moins un polyol contenant au moins deux et au plus 12 groupes hydroxyle par molécule et ayant une masse moléculaire relative moyenne dans la plage allant de 64 à 2 000 g/mol en combinaison avec au moins un copolymère d'au moins une oléfine avec au moins un ester de l'acide méthacrylique ou un ester de l'acide acrylique d'un alcool aliphatique, qui présente un indice de fluidité (MFI) mesuré à 190 °C et à une charge de 2,16 kg dans la plage allant de 100 g/10 min à 800 g/10 min, pour la réduction ou l'inhibition des dégâts thermo-oxydatifs sur des matériaux de moulage à base de polyamide ou des produits à base de polyamide fabriqués à partir de ces matériaux de moulage, dans le cas de l'utilisation de polyols qui sont des mélanges de polyols oligomères et/ou polymères, la moyenne en nombre du poids moléculaire (Mₙ) s'appliquant pour ce constituant du mélange au lieu de la masse moléculaire relative.

16. Utilisation selon la revendication 15, **caractérisée en ce que** les produits sont des articles de l'industrie électrique, électronique, des télécommunications, des technologies de l'information, solaire, informatique, pour le domaine ménager, pour le sport, pour des applications médicales ou pour l'industrie des divertissements.
